# EUROPÄISCHE PATENTSCHRIFT

(11) **EP 3 201 501 B1**
(45) Veröffentlichungstag und Bekanntmachung des Hinweises auf die Patenterteilung: **29.08.2018**
(21) Anmeldenummer: 15774540.7
(22) Anmeldetag: 23.09.2015
(51) Int. Cl.: F16K 11/02, G01N 30/20

(54) **MEHRWEGEVENTIL**
MULTI-WAY VALVE
DISTRIBUTEUR MULTIVOIE

(30) Priorität: 29.09.2014 DE 102014219712
(43) Veröffentlichungstag der Anmeldung: 09.08.2017
(73) Patentinhaber: Siemens Aktiengesellschaft, 80333 München (DE)
(72) Erfinder: GELLERT, Udo, 76756 Bellheim (DE)
(86) Internationale Anmeldenummer: PCT/EP2015/071831
(87) Internationale Veröffentlichungsnummer: WO 2016/050574

(56) Entgegenhaltungen:
- US-A- 5 203 368
- US-B1- 6 453 725

## Beschreibung

Die Erfindung betrifft ein Mehrwegeventil mit mindestens drei Ventilanschlüssen, von denen mindestens ein Paar von benachbarten Ventilanschlüssen in einer ersten Ventilstellung fluidisch verbunden und in einer zweiten Ventilstellung fluidisch getrennt ist und mindestens ein weiteres Paar von benachbarten Ventilanschlüssen in der ersten Ventilstellung fluidisch getrennt und in der zweiten Ventilstellung fluidisch verbunden ist,
mit einem Oberteil, einem Unterteil und einem plattenförmigen Mittelteil, das unter Zwischenlage einer ersten Membran mit dem Oberteil und unter Zwischenlage einer zweiten Membran mit dem Unterteil verbunden ist, wobei
- das Mittelteil für jeden Ventilanschluss jeweils ein Kanalsystem mit einer ersten Öffnung auf der Oberseite des Mittelteils, einer zweiten Öffnung auf der Unterseite des Mittelteils und einer dritten Öffnung zur Verbindung mit dem Ventilanschluss enthält,
- das Oberteil auf seiner der ersten Membran zugewandten Seite für jedes in der ersten Ventilstellung fluidisch verbundene Paar von benachbarten Ventilanschlüssen jeweils eine Ausnehmung enthält, die den dem Paar zugeordneten ersten Öffnungen auf der Oberseite des Mittelteils gegenüberliegt, so dass die erste Membran bei Auslenkung in die Ausnehmung hinein die ersten Öffnungen freigibt und bei Druckbeaufschlagung mit einem Steuerfluid in der Ausnehmung die ersten Öffnungen verschließt, und
- das Unterteil auf seiner der unteren Membran zugewandten Seite für jedes in der zweiten Ventilstellung fluidisch verbundene weitere Paar von benachbarten Ventilanschlüssen jeweils eine Ausnehmung enthält, die den dem weiteren Paar zugeordneten zweiten Öffnungen auf der Unterseite des Mittelteils gegenüberliegt, so dass die zweite Membran bei Auslenkung in die Ausnehmung hinein die zweiten Öffnungen freigibt und bei Druckbeaufschlagung mit dem Steuerfluid in der Ausnehmung die zweiten Öffnungen verschließt.

Ein derartiges Mehrwegeventil ist aus der US 6,453,725 B1 bekannt.

Aus der US 5,203,368 A ist ein einzelnes Ventil mit einem plattenförmigen Oberteil, einem Unterteil und einem Mittelteil bekannt, zwischen dem und dem Unterteil eine Membran liegt. Das Unterteil enthält eine Ausnehmung, der zwei Öffnungen in dem Mittelteil gegenüberliegen. Je nachdem ob mittels eines Steuerfluids ein Über- oder Unterdruck in der Ausnehmung erzeugt wird, verschließt die Membran die Öffnungen oder gibt sie frei. Die Öffnungen sind über Durchgänge mit Rinnen auf der von der Membran abgewandten Seite des Mittelteils verbunden. Die von dem aufliegenden Oberteil abgedeckten Rinnen bilden lateral verlaufende Fluidkanäle, die zu Ventilanschlüssen führen.

Aus der US 5,496,009 A ist ein Mehrwegeventil in Form einer Ventilmatrix mit mindestens vier Ventilen bekannt, um mindestens zwei Zulaufkanäle individuell mit mindestens zwei Ablaufkanälen zu verbinden. Das Mehrwegeventil weist ein plattenförmiges Oberteil, ein Unterteil und ein Mittelteil auf, wobei zwischen Oberteil und Mittelteil eine Membran und zwischen Unterteil und Mittelteil eine Dichtungsfolie liegt. Die Zulaufkanäle werden durch parallele Rinnen auf der Oberseite des Mittelteils gebildet, die durch die Membran abgedeckt werden. Die Ablaufkanäle werden von quer dazu verlaufenden parallelen Rinnen auf der Unterseite des Mittelteils gebildet, die durch die Dichtungsfolie abgedeckt werden. Das Oberteil enthält für jedes Ventil jeweils eine Ausnehmung, der in dem Mittelteil einer der Zulaufkanäle und eine mit einem der Ablaufkanäle verbundene Öffnung gegenüberliegen. Je nachdem ob mittels eines Steuerfluids ein Über- oder Unterdruck in der Ausnehmung erzeugt wird, verschließt die Membran die Öffnung und den Zulaufkanal oder gibt sie frei.

Das aus der oben erwähnten US 6,453,725 B1 bekannte Mehrwegeventil kann zur Probendosierung und Trennsäulenumschaltung in der Gaschromatographie verwendet werden. Dabei wird beispielsweise in einer ersten Ventilstellung eine aus einem technischen Prozess entnommene Probe in einem kontinuierlichen Strom durch eine Dosierschleife mit definiertem Dosiervolumen geleitet, während gleichzeitig eine aus einer Trennsäule oder mehreren verschalteten Trennsäulen bestehende Trenneinrichtung des Gaschromatographen mit einem Trägergas gespült wird. In einer zweiten Ventilstellung wird die in der Dosierschleife enthaltene Probenmenge mittels des Trägergases durch die Trenneinrichtung geführt, dabei in unterschiedliche Probenbestandteile zerlegt und anschließend detektiert, während der Probenstrom an der Dosierschleife vorbeigeleitet wird.

Ein Beispiel des bekannten Mehrwegeventils ist in Figur 1 im Querschnitt, in Figur 2 im Längsschnitt entlang der Linie AA', in Figur 3 in einem schematisierten aufgerollten Schnitt entlang der Kreislinie BB' in einer ersten Ventilstellung und in Figur 4 in einer zweiten Ventilstellung gezeigt.

Das Mehrwegeventil besteht aus einem zylindrischen Oberteil 1, einem zylindrischen Unterteil 2 und einem Mittelteil 3, in Form einer Zylinderplatte, das unter Zwischenlage einer ersten Membran 4 mit dem Oberteil 1 und unter Zwischenlage einer zweiten Membran 5 mit dem Unterteil 2 verbunden ist. An dem Mittelteil 3 sind in Umfangsrichtung und mit gleichem Winkelabstand zueinander zehn Ventilanschlüsse 6a-6j montiert, über die dem Ventil zu schaltende oder zu verteilende Fluide zugeführt oder aus dem Ventil herausgeführt werden. Das Mittelteil 3 enthält für jeden Ventilanschluss 6a-6j jeweils ein Kanalsystem, z. B. 7i, mit einer ersten Öffnung 8i auf der Oberseite des Mittelteils 3, einer zweiten Öffnung 9i auf der Unterseite des Mittelteils 3 und einer dritten Öffnung 10i zur Verbindung mit dem Ventilanschluss 6i. Bei dem gezeigten Beispiel besteht das Kanalsystem 7i aus einem die Öffnungen 8i und 9i auf der Ober- und Unterseite des Mittelteils 3 auf kürzestem Weg miteinander verbindenden Kanalabschnitt und einem davon in der Mitte T-förmig in Richtung zu dem Ventilanschluss 6i abzweigenden Kanalabschnitt.

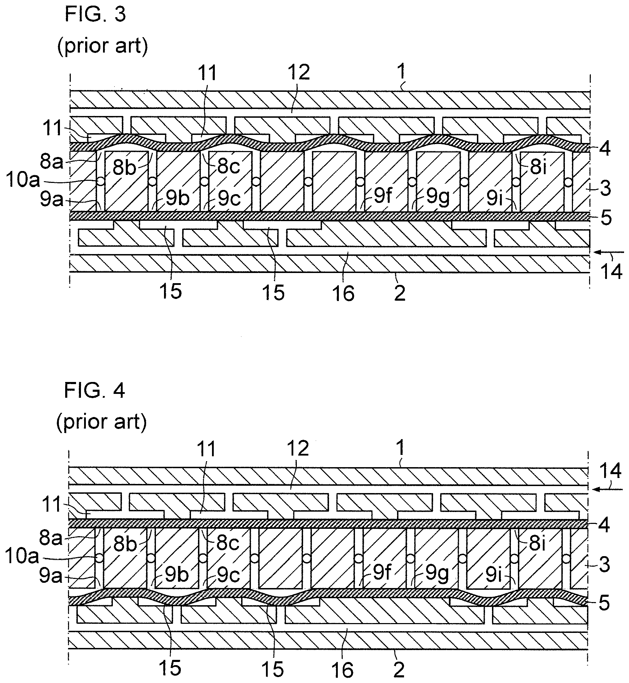

Bei dem beispielhaft gezeigten bekannten Mehrwegeventil ist vorgesehen, dass die benachbarten und jeweils ein Paar bildenden Ventilanschlüsse 6a und 6b, 6c und 6d, 6e und 6f, 6g und 6h sowie 6i und 6j in der in Figur 3 gezeigten ersten Ventilstellung jeweils miteinander fluidisch verbunden und in der in Figur 4 gezeigten zweiten Ventilstellung fluidisch getrennt sind. Weitere Paare von benachbarten Ventilanschlüssen 6b und 6c, 6d und 6e, 6h und 6i, sowie 6j und 6a sind dagegen in der ersten Ventilstellung fluidisch getrennt und in der zweiten Ventilstellung fluidisch verbunden.

Die fluidische Verbindung oder Trennung der verschiedenen Paare von benachbarten Ventilanschlüssen erfolgt mit Hilfe der beiden Membranen 4 und 5, indem diese wechselseitig auf ihrer von dem Mittelteil 3 abgewandten Seite mit einem Druck beaufschlagt oder von dem Druck entlastet werden. Dazu enthält das Oberteil 1 auf seiner der ersten Membran 4 zugewandten Seite für jedes in der ersten Ventilstellung fluidisch zu verbindende Paar von benachbarten Ventilanschlüssen, z. B. 6a und 6b, jeweils eine Ausnehmung 11, die den dem betreffenden Paar zugeordneten ersten Öffnungen 8a, 8b auf der Oberseite des Mittelteils 3 gegenüberliegt. Bei den Paaren von benachbarten Ventilanschlüssen, z. B. 6b und 6c, die in der ersten Ventilstellung getrennt bleiben sollen, liegt den zugeordneten ersten Öffnungen 8b, 8c keine gemeinsame Ausnehmung in dem Oberteil 1 gegenüber, so dass die Membran 4 dort von dem Oberteil 1 unmittelbar gegen das Mittelteil 3 gepresst wird und so die ersten Öffnungen 8b, 8c voneinander trennt. Alle Ausnehmungen 11 sind über Kanäle 12 mit einem ersten Steuerfluid-Anschluss 13 verbunden, über den die erste Membran 4 mit einem zu- oder abschaltbaren Steuerfluid 14 (Druckluft) belastet oder entlastet werden kann.

Das Unterteil 2 enthält in gleicher Weise auf seiner der zweiten Membran 5 zugewandten Seite für jedes in der zweiten Ventilstellung fluidisch zu verbindende Paar von benachbarten Ventilanschlüssen, z. B. 6b und 6c, jeweils eine Ausnehmung 15, die den dem betreffenden Paar zugeordneten zweiten Öffnungen 9b, 9c auf der Unterseite des Mittelteils 3 gegenüberliegt. Bei den Paaren von benachbarten Ventilanschlüssen, z. B. 6a, 6b oder 6f, 6g, die in der ersten Ventilstellung getrennt bleiben sollen, liegt den zugeordneten zweiten Öffnungen 9a, 9b bzw. 9f, 9g keine gemeinsame Ausnehmung in dem Unterteil 2 gegenüber, so dass die zweite Membran 5 dort von dem Unterteil 2 unmittelbar gegen das Mittelteil 3 gepresst wird und so die zweiten Öffnungen 9a, 9b bzw. 9f, 9g voneinander trennt. Alle Ausnehmungen 15 sind über Kanäle 16 mit einem zweiten Steuerfluid-Anschluss 17 verbunden, über den die zweite Membran 5 mit dem zu- oder abschaltbaren Steuerfluid 14 belastet oder entlastet wird.

In der in Figur 3 gezeigten ersten Ventilstellung wird die zweite Membran 5 mit dem Steuerfluid 14 belastet, während die erste Membran 4 unbelastet ist. Die zweite Membran 5 legt sich daher an das Mittelteil 3 an und verschließt die zweiten Öffnungen 9a-9j. Die unbelastete erste Membran 4 gibt dagegen dem Druck der dem Ventil über einzelne der Ventilanschlüsse 6a-6j zugeführten Fluide nach und weicht in die Ausnehmungen 11 zurück, so dass die gegenüberliegenden ersten Öffnungen, z. B. 8a und 8b, freigegeben und die zugeordneten Ventilanschlüsse 6a, 6b miteinander fluidisch verbunden werden.

In der in Figur 4 gezeigten zweiten Ventilstellung wird die erste Membran 4 mit dem Steuerfluid 14 belastet, während die zweite Membran 5 unbelastet ist. Die erste Membran 4 legt sich daher an das Mittelteil 3 an und verschließt die ersten Öffnungen 8a-8j. Die unbelastete zweite Membran 5 gibt dagegen dem Druck der dem Ventil zugeführten Fluide nach und weicht in die Ausnehmungen 15 zurück, so dass die gegenüberliegenden zweiten Öffnungen, z. B. 8b und 8c, freigegeben und die zugeordneten Ventilanschlüsse 6b, 6c miteinander fluidisch verbunden werden.

Aufgrund von Totvolumina des bekannten Mehrwegeventils kann seine Verwendung in bestimmten Applikationen eingeschränkt sein. Beispielsweise wird der Ventilanschluss 6b in der ersten Ventilstellung über den Ventilanschluss 6a mit einem ersten Fluid und in der zweiten Ventilstellung über den Ventilanschluss 6c mit einem zweiten Fluid versorgt. Beim oder unmittelbar nach dem Umschalten von der ersten in die zweite Ventilstellung ist ein Teil des Kanalsystems 7b, nämlich der Totraum von der jetzt verschlossenen ersten Öffnung 8b bis zur Mitte des zwischen den Öffnungen 8b und 9b liegenden Kanalabschnitts, mit dem ersten Fluid gefüllt, das dann mit einer Verzögerung in das zweite Fluid eindiffundiert. Bei dem eingangs erwähnten Beispiel aus der Gaschromatographie kann es sich bei dem ersten Fluid um die Probe handeln, die während der ersten Ventilstellung durch die Dosierschleife geleitet und in der zweiten Ventilstellung mittels des Trägergases aus der Dosierschleife in die chromatographische Trenneinrichtung überführt wird. Das Eindiffundieren der Probe aus dem Totvolumen in das Trägergas führt zu einer unscharfen Injektion der Probe in den Trägergasstrom, was zu einer Verringerung der Auflösung der nachfolgenden chromatographischen Trennung führt (Peak mit Schultern).

Der Erfindung liegt die Aufgabe zugrunde, die Totvolumina des bekannten Mehrwegeventils zu verringern.

Gemäß der Erfindung wird die Aufgabe dadurch gelöst, dass bei dem Mehrwegeventil der eingangs angegebenen Art
- die Ventilanschlüsse an dem Oberteil und/oder dem Unterteil montiert sind,
- die in dem Mittelteil enthaltenen dritten Öffnungen zur Verbindung mit den Ventilanschlüssen auf der Oberseite oder Unterseite des Mittelteils liegen,
- die erste oder zweite Membran mit den dritten Öffnungen fluchtende Durchlässe enthält und
- das Oberteil oder Unterteil Kanäle zur fluidischen Verbindung der Ventilanschlüsse mit den Durchlässen enthält.

Bei dem bekannten Mehrwegeventil sind die Totvolumina durch die Dicke oder Bauhöhe des Mittelteils bestimmt, die wiederum von den Einbau- oder Montagemaßen der Ventilanschlüsse abhängig ist. Indem die Ventilanschlüsse von dem Mittelteil in das Oberteil oder Unterteil überführt werden, können die Dicke des Mittelteils und damit die Totvolumina nahezu beliebig reduziert werden. Die Ventilanschlüsse können gemeinsam entweder nur in dem Oberteil oder nur in dem Unterteil montiert sein, oder sie können, vorzugsweise zu gleichen Anteilen, auf das Ober- und Unterteil verteilt werden, um die zur Verfügung stehende Montagefläche an dem Ventil optimal zu nutzen und ggf. das Bauvolumen des Ventils zu minimieren. Die Ventilanschlüsse können ferner radial und/oder axial an dem Ober- und Unterteil montiert sein.

Das jedem Ventilanschluss jeweils zugeordnete Kanalsystem in dem Mittelteil enthält auf seiner Oberseite die erste Öffnung, auf der Unterseite die zweite Öffnung und auf der Ober- oder Unterseite die dritte Öffnung. Die erste und zweite Öffnung sind dabei, wie schon bei dem bekannten Mehrwegeventil, vorzugsweise über einen geraden Verbindungskanal auf kürzestem Wege miteinander verbunden. Von diesem Verbindungskanal kann ein weiterer L-förmig verlaufender Kanal zu der dritten Öffnung abzweigen. Zur Realisierung des L-förmig verlaufenden Kanals ist das Mittelteil vorzugsweise aus zwei Platten aufgebaut, wobei in einer oder beiden Platten, beispielsweise durch Ätzen, Rinnen ausgebildet sind, die nach Zusammenfügen der Platten, ggf. unter Zwischenlage einer Dichtungsfolie, den parallel zur Ober- oder Unterseite des Mittelteils verlaufenden Teil des L-förmigen Kanals bilden.

Die Verwendung des erfindungsgemäßen Mehrwegeventils in einem Gaschromatographen ermöglicht eine wesentlich präzisere Probendosierung, was wiederum kürzere Chromatographiezyklen möglich macht, ohne dass dazu andere Trennsäulen erforderlich sind.

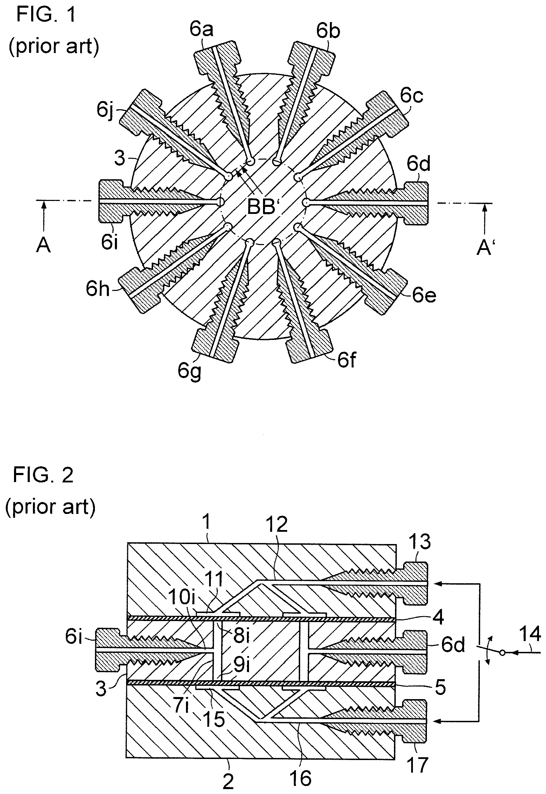

Zur weiteren Erläuterung der Erfindung wird im Folgenden auf die Figuren der Zeichnung Bezug genommen; im Einzelnen zeigen die
- Figur 1: ein Beispiel des bekannten Mehrwegeventils im Querschnitt,
- Figur 2: das Mehrwegeventil aus Figur 1 im Längsschnitt entlang der Linie AA', in Figur 3 in einem schematisierten aufgerollten Schnitt entlang der Kreislinie BB' in einer ersten Ventilstellung und in Figur 4 in einer zweiten Ventilstellung gezeigt,
- Figur 3: das Mehrwegeventil aus Figur 1 in einem schematisierten aufgerollten Schnitt entlang der Kreislinie BB' in einer ersten Ventilstellung,
- Figur 4: das Mehrwegeventil aus Figur 1 in einem schematisierten aufgerollten Schnitt entlang der Kreislinie BB' in einer zweiten Ventilstellung,

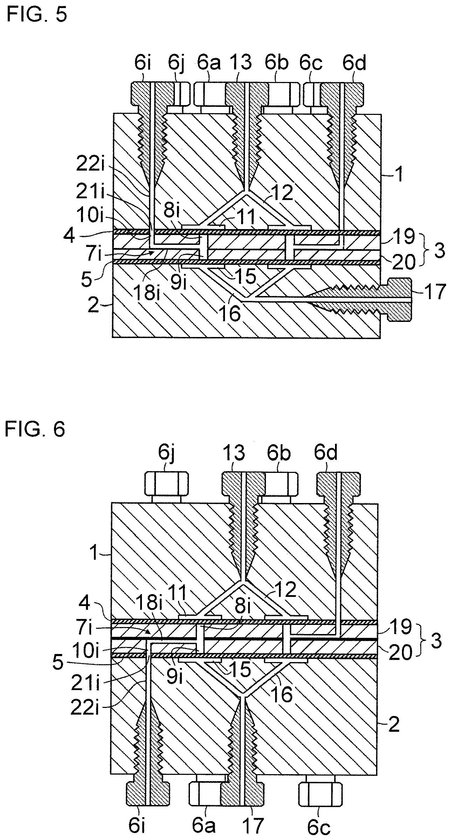

- Figur 5: ein erstes Ausführungsbeispiel des erfindungsgemäßen Mehrwegeventils im Querschnitt und
- Figur 6: ein weiteres Ausführungsbeispiel des erfindungsgemäßen Mehrwegeventils.

Das in den Figuren 1 bis 4 gezeigte Beispiel des bekannten Mehrwegeventils wurde oben bereits beschrieben.

Figur 5 zeigt einen Querschnitt durch ein erstes Ausführungsbeispiel des erfindungsgemäßen Mehrwegeventils. Wie auch das bekannte Ventil besteht es aus einem Oberteil 1, einem Unterteil 2 und einem Mittelteil 3, das unter Zwischenlage einer ersten Membran 4 mit dem Oberteil 1 und unter Zwischenlage einer zweiten Membran 5 mit dem Unterteil 2 verbunden ist. Im Unterschied zu dem bekannten Mehrwegeventil sind die zehn Ventilanschlüsse 6a-6j, von denen hier nur die Anschlüsse 6a-6d, 6i und 6j zu sehen sind, an dem Oberteil 1 in Axialrichtung montiert. Das Mittelteil 3 enthält für jeden Ventilanschluss 6a-6j jeweils ein Kanalsystem, z. B. das im Folgenden stellvertretend für die anderen Kanalsysteme beschriebene Kanalsystem 7i, mit einer ersten Öffnung 8i auf der Oberseite des Mittelteils 3, einer zweiten Öffnung 9i auf der Unterseite des Mittelteils 3 und einer dritten Öffnung 10i auf der Oberseite des Mittelteils 3 zur Verbindung mit dem Ventilanschluss 6i. Bei dem gezeigten Beispiel besteht das Kanalsystem 7i aus einem die Öffnungen 8i und 9i auf der Ober- und Unterseite des Mittelteils 3 auf kürzestem Weg miteinander verbindenden Verbindungskanal und einem davon in der Mitte T-förmig abzweigenden und zu der dritten Öffnung 10i führenden L-förmig verlaufenden Kanal 18i. Zur Realisierung des L-förmig verlaufenden Kanals 18i ist das Mittelteil 3 aus zwei Platten 19, 20 aufgebaut, wobei in der Platte 19 durch ein mikromechanisches Verfahren, z. B. Ätzen, Rinnen ausgebildet sind, welche nach Zusammenfügen der Platten 19, 20 den parallel zur Ober- oder Unterseite des Mittelteils 3 verlaufenden Teil des L-förmigen Kanals 18i bilden. Der axial zur dritten Öffnung 10i verlaufende Teil des Kanals 18i wird ebenso mikromechanisch hergestellt. In die erste Membran 4 sind mit den dritten Öffnungen, z. B. 10i, fluchtende Durchlässe 21i eingestanzt, von denen aus weitere Kanäle 22i in dem Oberteil 3 zu den Ventilanschlüssen 6i führen.

Wie auch bei dem bekannten Mehrwegeventil enthält das Oberteil 1 auf seiner der ersten Membran 4 zugewandten Seite für jedes in der ersten Ventilstellung fluidisch zu verbindende Paar von benachbarten Ventilanschlüssen jeweils eine Ausnehmung 11, die den dem betreffenden Paar zugeordneten ersten Öffnungen (hier z. B. die Öffnung 8i des Paares 8i, 8j sichtbar) auf der Oberseite des Mittelteils 3 gegenüberliegt. Alle Ausnehmungen 11 sind über Kanäle 12 mit einem ersten Steuerfluid-Anschluss 13 verbunden, der hier in der Mitte des Oberteils axial montiert ist und über den die erste Membran 4 mit einem zu- oder abschaltbaren Steuerfluid belastet oder entlastet werden kann.

Das Unterteil 2 enthält in gleicher Weise auf seiner der zweiten Membran 5 zugewandten Seite für jedes in der zweiten Ventilstellung fluidisch zu verbindende Paar von benachbarten Ventilanschlüssen jeweils eine Ausnehmung 15, die den dem betreffenden Paar zugeordneten zweiten Öffnungen (hier z. B. die Öffnung 9i des Paares 9i, 9j sichtbar) auf der Unterseite des Mittelteils 3 gegenüberliegt. Alle Ausnehmungen 15 sind über Kanäle 16 mit einem zweiten Steuerfluid-Anschluss 17 verbunden, über den die zweite Membran 5 mit einem zu- oder abschaltbaren Steuerfluid belastet oder entlastet werden kann.

Die Darstellung des Mehrwegeventils ist sehr vereinfacht und insbesondere nicht maßstabsgerecht. So weist das Mittelteil 3 eine Bauhöhe in der Größenordnung eines Millimeters und weniger auf, was erst durch die Verlegung der Ventilanschlüsse 6a-6j in das Oberteil 1 ermöglicht wird. Dementsprechend sind die Toträume des Verbindungskanals zwischen der ersten Öffnung 8i und der zweiten Öffnung 9i minimal.

Das in Figur 6 gezeigte weitere Ausführungsbeispiel des erfindungsgemäßen Mehrwegeventils unterscheidet sich von dem nach Figur 5 dadurch, dass die Ventilanschlüsse 6b, 6d, 6f, 6h, 6j an dem Oberteil 1 und die anderen Ventilanschlüsse 6a, 6c, 6e, 6g, 6i an dem Unterteil 2 montiert sind. Die beiden Platten 19, 20 des Mittelteils 3 sind unter Zwischenlage einer Dichtungsfolie 23 zusammengefügt.

Das beschriebene Mehrwegeventil mit seinen zehn Ventilanschlüssen 6a-6j kann zur Probendosierung (Injektion) und Trennsäulenumschaltung in einem Gaschromatograph verwendet werden. Für die alleinige Verwendung zur Probendosierung sind sechs Ventilanschlüsse ausreichend. Eine weitere vorteilhafte Verwendung findet sich bei der zweidimensionalen Gaschromatographie in der Dosierung des Eluats einer ersten Trennsäule in eine zweite Trennsäule, wo eine sehr hohe Dosierqualität verlangt wird.

## Patentansprüche

1. Mehrwegeventil mit mindestens drei Ventilanschlüssen (6a-6j), von denen mindestens ein Paar von benachbarten Ventilanschlüssen in einer ersten Ventilstellung fluidisch verbunden und in einer zweiten Ventilstellung fluidisch getrennt ist und mindestens ein weiteres Paar von benachbarten Ventilanschlüssen in der ersten Ventilstellung fluidisch getrennt und in der zweiten Ventilstellung fluidisch verbunden ist,
mit einem Oberteil (1), einem Unterteil (2) und einem plattenförmigen Mittelteil (3), das unter Zwischenlage einer ersten Membran (4) mit dem Oberteil (1) und unter Zwischenlage einer zweiten Membran (5) mit dem Unterteil (2) verbunden ist, wobei
- das Mittelteil (3) für jeden Ventilanschluss (6a-6j) jeweils ein Kanalsystem mit einer ersten Öffnung (8i) auf der Oberseite des Mittelteils (3), einer zweiten Öffnung (9i) auf der Unterseite des Mittelteils (3) und einer dritten Öffnung (10i) zur Verbindung mit dem Ventilanschluss (6i) enthält,
- das Oberteil (1) auf seiner der ersten Membran (4) zugewandten Seite für jedes in der ersten Ventilstellung fluidisch verbundene Paar von benachbarten Ventilanschlüssen jeweils eine Ausnehmung (11) enthält, die den dem Paar (6a, 6b) zugeordneten ersten Öffnungen (8a, 8b) auf der Oberseite des Mittelteils (3) gegenüberliegt, so dass die erste Membran (4) bei Auslenkung in die Ausnehmung (11) hinein die ersten Öffnungen (8a, 8b) freigibt und bei Druckbeaufschlagung mit einem Steuerfluid (14) in der Ausnehmung (11) die ersten Öffnungen (8a, 8b) verschließt, und
- das Unterteil (2) auf seiner der unteren Membran (5) zugewandten Seite für jedes in der zweiten Ventilstellung fluidisch verbundene weitere Paar von benachbarten Ventilanschlüssen jeweils eine Ausnehmung (15) enthält, die den dem weiteren Paar (6b, 6c) zugeordneten zweiten Öffnungen (9b, 9c) auf der Unterseite des Mittelteils (3) gegenüberliegt, so dass die zweite Membran (5) bei Auslenkung in die Ausnehmung (15) hinein die zweiten Öffnungen (9b, 9c) freigibt und bei Druckbeaufschlagung mit dem Steuerfluid (14) in der Ausnehmung (15) die zweiten Öffnungen (9b, 9c) verschließt,
**dadurch gekennzeichnet,**
- **dass** die Ventilanschlüsse (6a-6j) an dem Oberteil (1) und/oder dem Unterteil (2) montiert sind,
- **dass** die in dem Mittelteil (3) enthaltenen dritten Öffnungen zur Verbindung mit den Ventilanschlüssen (6i) auf der Oberseite oder Unterseite des Mittelteils (3) liegen,
- **dass** die erste oder zweite Membran (4, 5) mit den dritten Öffnungen (10i) fluchtende Durchlässe (21i) enthält und
- **dass** das Oberteil (1) oder Unterteil (2) Kanäle (22i) zur fluidischen Verbindung der Ventilanschlüsse (6i) mit den Durchlässen (21i) enthält.

2. Mehrwegeventil nach Anspruch 1, **dadurch gekennzeichnet, dass** ein Teil der Ventilanschlüsse (6a-6j) an dem Oberteil (1) und der verbleibende Teil an dem Unterteil (2) montiert sind.

3. Mehrwegeventil nach Anspruch 1, **dadurch gekennzeichnet, dass** die Hälfte der Ventilanschlüsse (6a-6j) an dem Oberteil (1) und der verbleibende Teil an dem Unterteil (2) montiert sind.

4. Mehrwegeventil nach einem der vorangehenden Ansprüche, **dadurch gekennzeichnet, dass** das Mittelteil (3) aus zwei zusammengefügten Platten (19, 20) besteht, wobei in einer oder beiden Platten (19, 20) Rinnen ausgebildet sind, die nach Zusammenfügen der Platten (19, 20) parallel zur Ober- oder Unterseite des Mittelteils (3) verlaufende Teile des Kanalsystems bilden.

5. Mehrwegeventil nach Anspruch 4, **dadurch gekennzeichnet, dass** die Platten (19, 20) unter Zwischenlage einer Dichtungsfolie (23) zusammengefügt sind.

6. Mehrwegeventil nach einem der vorangehenden Ansprüche, **dadurch gekennzeichnet, dass** das Mittelteil (3) eine Bauhöhe in der Größenordnung eines Millimeters aufweist.

7. Verwendung des Mehrwegeventils nach einem der vorangehenden Ansprüche in einem Gaschromatograph.

8. Verwendung des Mehrwegeventils nach Anspruch 7 zur Probendosierung in dem Gaschromatograph.

9. Verwendung des Mehrwegeventils nach Anspruch 7 oder 8 zur Trennsäulenumschaltung in dem Gaschromatograph.

10. Verwendung des Mehrwegeventils nach Anspruch 7 zur Dosierung des Eluats einer ersten Trennsäule in eine zweite Trennsäule des Gaschromatographen.

## Claims

1. Multi-way valve having at least three valve connections (6a-6j), of which at least one pair of adjacent valve connections is connected fluidically in a first valve position and is separated fluidically in a second valve position and at least one further pair of adjacent valve connections is separated fluidically in the first valve position and is connected fluidically in the second valve position, having an upper part (1), a lower part (2) and a plate-shaped central part (3), which is connected with the upper part (1) with the interposition of a first membrane (4) and with the lower part (2) with the interposition of a second membrane (5), wherein
- for each valve connection (6a-6j) the central part (3) contains a channel system with a first opening (8i) on the upper side of the central part (3), a second opening (9i) on the lower side of the central part (3) and a third opening (10i) for connection with the valve connection (6i),
- the upper part (1) on its side facing the first membrane (4) contains a recess (11) for each pair of adjacent valve connections connected fluidically in the first valve position in each case, which recess is opposite to the first openings (8a, 8b) assigned to the pair (6a, 6b) on the upper side of the central part (3), so that upon deflection into the recess (11) the first membrane (4) releases the first openings (8a, 8b) and closes the first openings (8a, 8b) when pressure is applied with a control fluid (14) in the recess (11), and
- on its side facing the lower membrane (5) the lower part (2) contains a recess (15) for each further pair of adjacent valve connections connected fluidically in the second valve position, which recess is opposite to the openings (9b, 9c) assigned to the further pair (6b, 6c) on the lower side of the central part (3), so that upon deflection into the recess (15) the second membrane (5) releases the second openings (9b, 9c) and closes the second openings (9b, 9c) when pressure is applied with the control fluid (14) in the recess (15),
**characterised in that**
- the valve connections (6a-6j) are mounted on the upper part (1) and/or the lower part (2),
- the third openings,for connection with the valve connections (6i), contained in the central part (3) lie on the upper side or lower side of the central part (3),
- the first or second membrane (4, 5) with the third openings (10i) contains aligned passages (21i) and
- the upper part (1) or lower part (2) contains channels (22i) for fluidic connection of the valve connections (6i) with the passages (21i).

2. Multi-way valve according to claim 1, **characterised in that** one part of the valve connections (6a-6j) is mounted on the upper part (1) and the remaining part is mounted on the lower part (2).

3. Multi-way valve according to claim 1, **characterised in that** half of the valve connections (6a-6j) is mounted on the upper part (1) and the remaining part is mounted on the lower part (2).

4. Multi-way valve according to one of the preceding claims, **characterised in that** the central part (3) consists of two assembled plates (19, 20), wherein grooves are embodied in one or both plates (19, 20), which, after assembling the plates (19, 20), form parts of the channel system which run in parallel to the upper or lower side of the central part (3).

5. Multi-way valve according to claim 4, **characterised in that** the plates (19, 20) are assembled with the interposition of a sealing film (23).

6. Multi-way valve according to one of the preceding claims, **characterised in that** the central part (3) has an installation height in the order of magnitude of a millimetre.

7. Use of the multi-way valve according to one of the preceding claims in a gas-phase chromatograph.

8. Use of the multi-way valve according to claim 7 for sample dosing in the gas-phase chromatograph.

9. Use of the multi-way valve according to claim 7 or 8 for separation column switchover in the gas-phase chromatograph.

10. Use of the multi-way valve according to claim 7 for dosing the eluate of a first separation column in a second separation column of the gas-phase chromatograph.

## Revendications

1. Distributeur à plusieurs voies ayant au moins trois raccords (6a-6j), dont au moins une paire de raccords voisins communiquent fluidiquement dans une première position du distributeur et dans une deuxième position du distributeur et sont séparés fluidiquement et au moins une autre paire de raccords voisins sont séparés fluidiquement dans la première position du distributeur et communiquent fluidiquement dans la deuxième position du distributeur,
comprenant une partie (1) supérieure, une partie (2) inférieure et une partie (3) médiane en forme de plaque, qui, avec interposition d'une première membrane (4), est reliée à la partie (1) supérieure et, avec interposition d'une deuxième membrane (5), à la partie (2) inférieure, dans lequel
- la partie (3) médiane comporte, pour chaque raccord (6a-6j) respectivement un système de canalisation ayant une première ouverture (8i) sur la face supérieure de la partie (3) médiane, une deuxième ouverture (9i) sur la face inférieure de la partie (3) médiane et une troisième ouverture (10i) de liaison avec le raccord (6i),
- la partie (1) supérieure comporte sur la face tournée vers la première membrane (4), pour chaque paire, communiquant fluidiquement dans la première position du distributeur, de raccords voisins, respectivement un évidement (11), qui est opposé aux premières ouvertures (8a, 8b), associées à la paire (6a, 6b), sur la face supérieure de la partie (3) médiane, de sorte que la première membrane (4), lorsqu'elle est déviée dans l'évidement (11), dégage les premières ouvertures (8a, 8b) et, lorsqu'elle est soumise à la pression d'un fluide (14) de commande dans l'évidement (11), ferme les premières ouvertures (8a, 8b) et
- la partie (2) inférieure comporte, sur la face tournée vers la membrane (5) inférieure, pour chaque autre paire, communiquant fluidiquement dans la deuxième position du distributeur, de raccords voisins, respectivement un évidement (15), qui est opposé aux deuxièmes ouvertures (9b, 9c) associées à l'autre paire (6b, 6c) sur la face inférieure de la partie (3) médiane, de sorte que la deuxième membrane (5), lorsqu'elle est déviée dans l'évidement (15), dégage les deuxièmes ouvertures (9b, 9c) et, lorsqu'elle est soumise à la pression du fluide (14) de commande dans l'évidement (15), ferme les ouvertures (9b, 9cc),
**caractérisé**
- **en ce que** les raccords (6a-6j) sont montés sur la partie (1) supérieure et/ou la partie (2) inférieure,
- **en ce que** les troisièmes ouvertures contenues dans la partie (3) médiane de liaison avec les raccords (6a) se trouvent sur la face supérieure ou la face inférieure de la partie (3) médiane,
- **en ce que** la première ou la deuxième membrane (4, 5) ayant les troisièmes ouvertures (10i) comporte des traversées (21a) alignées et
- **en ce que** la partie (1) supérieure ou la partie (2) inférieure comporte des canaux (22i) de mise en communication fluidique des raccords (6i) avec les traversées (21i).

2. Distributeur à plusieurs voies suivant la revendication 1, **caractérisé en ce qu'**une partie des raccords (6a-6j) est montée sur la partie (1) supérieure et la partie restante sur la partie (2) inférieure.

3. Distributeur à plusieurs voies suivant la revendication 1, **caractérisé en ce que** la moitié des raccords (6a-6j) est montée sur la partie (1) supérieure et la partie restante sur la partie (2) inférieure.

4. Distributeur à plusieurs voies suivant l'une des revendications précédentes, **caractérisé en ce que** la partie (3) médiane est constituée de deux plaques (19, 20) assemblées, dans lequel, dans l'une ou dans les deux plaques (19, 20) sont constituées des rainures, qui, après assemblage des plaques (19, 20), forment des parties, s'étendant parallèlement à la face supérieure ou à la face inférieure de la partie (3) médiane, du système de canalisation.

5. Distributeur à plusieurs voies suivant la revendication 4, **caractérisé en ce que** les plaques (19, 20) sont assemblées avec interposition d'une feuille (23) d'étanchéité.

6. Distributeur à plusieurs voies suivant l'une des revendications précédentes, **caractérisé en ce que** la partie (3) médiane a une hauteur de l'ordre de grandeur d'un millimètre.

7. Utilisation du distributeur à plusieurs voies suivant l'une des revendications précédentes dans un chromatographe en phase gazeuse.

8. Utilisation du distributeur à plusieurs voies suivant la revendication 7, pour l'addition dosée d'échantillons dans le chromatographe en phase gazeuse.

9. Utilisation du distributeur à plusieurs voies suivant la revendication 7 ou 8, pour la commutation de colonnes de séparation dans le chromatographe en phase gazeuse.

10. Utilisation du distributeur à plusieurs voies suivant la revendication 7, pour l'addition de manière dosée de l'éluat d'une première colonne de séparation à une deuxième colonne de séparation du chromatographe en phase gazeuse.
